**Europäisches Patentamt**

**European Patent Office**

**Office européen des brevets**

(19)

(11) Veröffentlichungsnummer: **0 145 657**
**B1**

(12) # EUROPÄISCHE PATENTSCHRIFT

(45) Veröffentlichungstag der Patentschrift:
20.04.88

(51) Int. Cl.⁴: **B 23 H 7/26,** B 23 H 7/10

(21) Anmeldenummer: **84810552.4**

(22) Anmeldetag: **13.11.84**

(54) **Richteinrichtung für den Draht einer Draht-Elektroerodier-Maschine.**

(30) Priorität: **15.11.83  CH 6150/83**

(43) Veröffentlichungstag der Anmeldung:
**19.06.85 Patentblatt 85/25**

(45) Bekanntmachung des Hinweises auf die Patenterteilung:
**20.04.88 Patentblatt 88/16**

(84) Benannte Vertragsstaaten:
**CH DE FR GB IT LI SE**

(56) Entgegenhaltungen:
**DE - A - 3 003 122**
**DE - A - 3 021 669**
**DE - B - 2 052 178**
**GB - A - 1 475 725**
**US - A - 4 123 645**

(73) Patentinhaber: **Büchler B-SET AG, Wiler Strasse 98,**
**CH-9230 Flawil (CH)**

(72) Erfinder: **Büchler, René, Weidweg 2, CH-9245 Sonnental**
**(SG) (CH)**

(74) Vertreter: **EGLI-EUROPEAN PATENT ATTORNEYS,**
**Horneggstrasse 4, CH-8008 Zürich (CH)**

## Beschreibung

Die vorliegende Erfindung betrifft eine Richteinrichtung für einen Erodierdraht einer Draht-Elektroerosions-Maschine gemäss dem Oberbegriff des Patentanspruches 1.

Aus der US-A-4,123,645 ist eine Draht-Elektroerodier-Maschine bekannt, bei der die obere und die untere Drahtführung jeweils an einem Block befestigt sind, wobei diese Blöcke ihrerseits an einer drehbar gelagerten Scheibe befestigt und durch Verstellmechanismen gegenüber letzterer verschiebbar sind. An den genannten Blöcken befinden sich zusätzlich sog. Stromzuführungen, die als elektrische Kontakte ausgebildet sind, mit denen der Erodierdraht in Berührung bringbar ist und mittels derer der Erodierdraht an eine zum Elektroerodieren benötigte Stromquelle anschliessbar ist. Mit dieser bekannten Einrichtung kann einerseits die Neigung des Erodierdrahtes verstellt werden und andererseits können die Stromzuführungen durch Drehen der genannten Scheiben so eingestellt werden, dass eine V-förmige Nut in den Stromzuführungen immer in Schnittrichtung ausgerichtet ist.

Aus der DE-A1-30 21 669 ist ebenfalls eine Draht-Elektroerodier-Maschine bekannt, die als Stromzuführungen für den Erodierdraht zurückziehbare Kontaktfinger aufweist.

Für ein präzises Arbeiten von Draht-Elektroerodier-Maschinen ist es erforderlich, den Erodierdraht vor Beginn des Erodierens exakt auszurichten, ihn also beispielsweise für vertikale Schnitte äusserst präzise in eine vertikale Lage zu bringen. Hierzu benötigt man sehr genaue Messgeräte, mit denen die Ausrichtung des Drahtes vermessen werden kann. Solche Messgeräte werden als «Richteinrichtungen» bezeichnet. Diese Richteinrichtung wird an der Elektroerosionsmaschine aufgespannt. Sie enthält einen oder in manchen Ausführungsformen auch zwei elektrische Kontakte, welche die gewünschte Ausrichtung des Erodierdrahtes definieren. Zum Ausrichten des Erodierdrahtes wird dieser durch Bewegung seiner oberen und/oder unteren Drahtführung so lange verschoben, bis der Draht, der dabei unter elektrischer Spannung steht, mit dem bzw. den elektrischen Kontakten der Richteinrichtung in Berührung kommt. Der bzw. die elektrischen Kontakte der Richteinrichtung erhalten dann ein elektrisches Signal, welches die exakte Ausrichtung des Erodierdrahtes kennzeichnet, worauf die Zustellbewegungen der Drahtführungen beendet werden.

Bei einer bekannten Richteinrichtung dieser Art sind zwei elektrische Kontakte vorgesehen, wobei diese als Platten ausgebildet sind.

Eine dieser Platten liegt am Richblock oben und die andere unten. Der Abstand der Platten voneinander beträgt etwa 100 mm. Der Erodierdraht verläuft dabei in vertikaler Richtung, wobei die Drahtführung an der Elektroerosionsmaschine so ausgeführt ist, dass der obere und der untere Teil des Drahtes voneinander unabhängig in einer Ebene bewegt werden können, zu welcher der Erodierdraht praktisch rechtwinklig steht. Dies ermöglicht, den Erodierdraht senkrecht einzustellen oder ihn in eine gewünschte geneigte Lage zu bringen.

Wenn ein Schnitt im Werkstück unter einem bestimmten Winkel geführt werden soll, dann bringt man zunächst den Richtblock in die gewünschte schräge Lage, so dass die Ebene, in der die Oberfläche der Kontakte liegt, mit der Senkrechten den gewünschten Winkel schliesst. Sobald der Erodierdraht die Kontakte berührt, liefern diese den elektrischen Impuls an eine zentrale Steuereinheit der Maschine. Falls diese Steuereinheit gleichzeitig den elektrischen Impuls von dem oberen und dem unteren Kontakt erhält, wertet sie dies so aus, dass der Erodierdraht parallel zu bzw. in jener Ebene liegt, in der auch die Oberflächen der elektrischen Kontakte liegen. Der Erodierdraht weist dann die gewünschte Neigung auf und der Bearbeitungsvorgang kann angefangen werden.

Wenn die genannten Impulse von den Kontakten nacheinander ausgesandt werden, dann untersucht die zentrale Steuereinheit, welcher der Impulse früher und welcher später eingetroffen ist. Dies verursacht dann eine entsprechende Verschiebung der oberen oder der unteren Drahtführung und somit auch eine Änderung der Neigung des Erodierdrahtes. Jetzt wird der Erodierdraht erneut an die Kontakte herangeführt und die Gleichzeitigkeit der von den elektrischen Kontakten gelieferten Impulse wird wieder überprüft. Sodann wird etweder ein weiterer Korrekturvorgang für die Lage des Erodierdrahtes eingeleitet oder es wird angezeigt, dass der Erodierdraht die gewünschte Lage aufweist.

Die jeweiligen Kontakte dieser bekannten Richteinrichtung enthalten eine Platte. Diese Platte weist einen praktisch rechtwinkligen Einschnitt auf, wobei die diesen Einschnitt aufweisende Partie der Platte vom Richtblock absteht. Der Erodierdraht kann in diesen Einschnitt hineingeführt werden. Die rechtwinklig zueinander stehenden Seiten des Einschnittes in der Platte sind mit elektrischen Kontakten versehen, die vom übrigen Teil der sonst aus Metall angefertigten Platte isoliert sind. Als elektrische Kontakte dienen elektrisch leitende Plättchen, die an den Seiten des Einschnittes isoliert angebracht sind und deren freie Oberfläche vertikal verläuft.

Bei der bekannten Richteinrichtung war es nicht möglich, die Lage des Erodierdrahtes mit einer Genauigkeit im Bereich von 2-3 Tausendsteln mm einzustellen. Wird nämlich der Erodierdraht an die Plättchen herangeführt, so beeinflussen die Kanten dieser Plättchen massgebend den Zeitpunkt der Abgabe des genannten Impulses an die zentrale Steuereinheit. Dieser Einfluss ist keine lineare Grösse, weil hier nicht nur die Neigung des Erodierdrahtes in Bezug auf die Plättchen sondern auch eine allfällige Verschmutzung der Kante der Plättchen usw. eine entscheidende Rolle spielen.

Aufgabe der vorliegenden Erfindung ist es, die Richteinrichtung der bekannten Art dahingehend zu verbessern, dass ein präziseres Ausrichten des Erodierdrahtes möglich ist.

Diese Aufgabe wird bei der gattungsgemässen Richteinrichtung durch die im kennzeichnenden Teil des Anspruches 1 angegebenen Merkmale gelöst. Vorteilhafte Ausgestaltungen und Weiterbildungen der Erfindung sind den Unteransprüchen zu entnehmen.

Nachstehend werden Ausführungsbeispiele der vorliegenden Erfindung anhand der beiliegenden Zeichnung näher erläutert. Es zeigt:

Fig. 1 eine Seitenansicht jener Partie der Draht-Elektroerodier-Maschine, die einen Richtblock zur Ausrichtung des drahtförmigen Werkzeuges der Maschine aufweist,

Fig. 2 eine Draufsicht der in Fig. 1 dargestellten Partie der Maschine und

Fig. 3 teilweise in Längsschnitt eine der Kontakteinrichtungen, die am Richtblock gemäss Fig. 1 angebracht sind.

Die vorliegende Richteinrichtung für den Draht einer Draht-Elektroerodier-Maschine enthält einen Richtblock 1, der aus einem elektrisch leitenden Material ist und der im vertikalen Schnitt etwa L-förmig ist. Der horizontale Schenkel 2 des Richtblockes 1 ist auf einem Zwischenstück 3 befestigt, während der vertikale Schenkel 4 zur Zusammenarbeit mit dem Erodierdraht 5 ausgebildet ist, welcher als das Werkzeug der Draht-Elektroerodier-Maschine dient. In der Zeichnung ist nur ein Ausschnitt des Erodierdrahtes 5 gezeigt, dessen übrige Teile in der bei den genannten Maschinen üblichen Weise geführt sind. Die obere und die untere Endpartie (nicht dargestellt) des Erodierdrahtes 5 sind über Rollen geführt, die in einer senkrecht zum Erodierdraht 5 verlaufenden Ebene bewegbar sind. Durch die Verstellung der Rollen in der genannten Ebene kann der Erodierdraht 5 in eine vertikale oder eine andere geneigte Lage gebracht werden.

Die Unterseite des Zwischenstückes 3 weist eine Nut 10 auf, bei der eine ihrer Seitenflächen 11 unterschnitten ist. Die gegenüberliegende Randpartie 12 des Zwischenstückes 3 weist eine Ausnehmung auf, in der ein Haltestück 13 entnehmbar befestigt ist. Dieses Haltestück 13 kann in der linken Randpartie 12 beispielsweise mit Hilfe einer Schraube, durch magnetische Kraft oder ähnlich gehalten werden. Die untere Partie des Haltestückes 13 ist mit einer Nase 14 versehen, die in das Innere der Nut 10 ragt. In der Nut 10 befindet sich die obere Partie eines Balkens 15, der unten entweder direkt oder indirekt auf dem Maschinentisch befestigt ist. Die obere Partie des Balkens 15 weist einander gegenüberliegende Rillen 16 und 17 auf, in welchen die unterschnittene Seitenfläche 11 der Nut 10 sowie die Nase 14 des Haltestückes liegen. Mittels der gerade genannten Teile lässt sich das Zwischenstück 3 entlang dem Balken 15 führen.

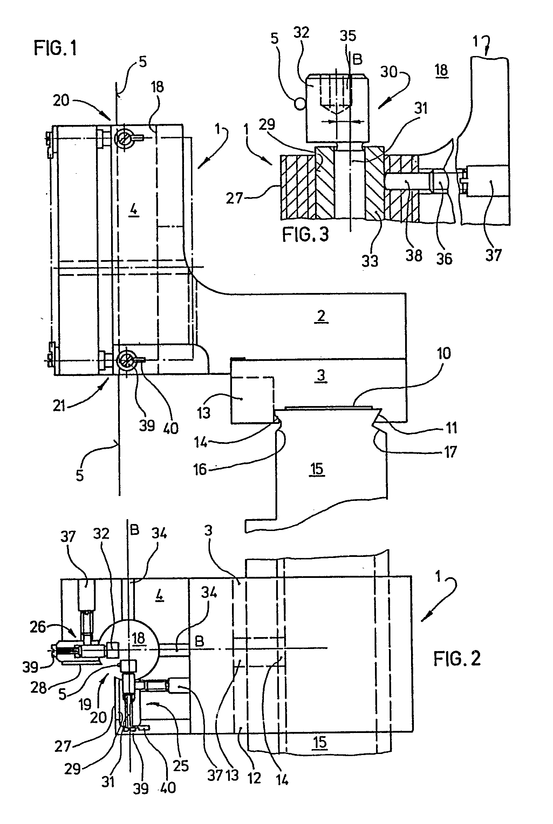

Der vertikale Schenkel 4 des Richtblockes 1 weist eine etwa in der Mitte desselben befindliche und etwa vertikal verlaufende Bohrung 18 auf. Eine Eckpartie des Richtblockes 4 ist entfernt worden, so dass man mit dem geführten Erodierdraht 5 in die Bohrung 18 gelangen kann. Die offene Partie 19 des Richtblockes 1 ist links unten in Fig. 2 dargestellt. Am Richtblock 1 oben befindet sich eine erste Kontaktstelle 20 für den Erodierdraht 5. Unten am Richtblock 1 ist eine zweite Kontaktstelle 21 dargestellt, die gleich ausgebildet ist wie die erstgenannte Kontaktstelle 20. Wenn eine der Endpartien des Erodierdrahtes 5 unbeweglich ist, dann kann man auch nur mit einer einzigen Kontaktstelle 20 oder 21 auskommen. Deswegen wird im Nachstehenden nur eine einzige Kontaktstelle näher beschrieben.

Die Kontaktstelle 20 enthält zwei Kontakteinrichtungen 25 und 26, die rechtwinklig zueinander stehen und die sonst gleich ausgebildet sind. Wie bereits gesagt worden ist, weist der Richtblock 1 eine ausgenommene Partie 19 auf. In der Nähe der in dieser Weise freigelegten Wände 27 und 28 sind parallel zu diesen im Richtblock 1 horizontal verlaufende Bohrungen 29 ausgeführt. In diesen Bohrungen 29 ist je ein Kontaktstift 30 gelagert, welcher einen der Bestandteile der Kontakteinrichtung 25 bzw. 26 darstellt.

Der genannte Kontaktstift 30 besteh aus einem Bolzen 31 und einem elektrischen Kontakt 32. Der Bolzen 31 liegt in einem hülsenförmigen Futter 33, das in die Bohrung 29 eingepresst ist. Dieses Futter 33 ist aus einem isolierendem Material. Im genannten Futter 33 ist der Kontaktstift 30 drehbar gelagert. Wenn erforderlich, können der Bolzen 31 und die Innenseite des Futters 33 mit Gewinde versehen sein. An der aus der Bohrung 29 hervorstehenden und in die vertikale zentrale Bohrung 18 ragenden Partie des Bolzens 31 ist der elektrische Kontakt 32 befestigt. Im dargestellten Beispiel ist der Kontakt 32 aussen zylinderförmig. Die Oberfläche des Kontaktes 32 könnte auch kugelförmig sein. Wichtig ist nur, dass die Oberfläche des elektrischen Kontaktes 32 nicht plan ist und dass sie daher keine Kanten am Rande einer planen Fläche aufweist.

Der elektrische Kontakt 32 ist am Bolzen 31 exzentrisch angebracht, was durch die Lage der Achse B des Bolzens 31, die zugleich auch die Achse der horizontalen Bohrung 29 ist, und des Achse G des Kontaktes 32 in Fig. 3 angedeutet ist. Der Erodierdraht 5 der Maschine kann durch die Zentraleinheit der Maschine bis zum Anschlag auf der Oberfläche des Kontaktes 32 geführt werden. Koaxial mit der vertikalen Bohrung 29 ist in der gegenüberliegenden Wand des Richtblockes 1 eine weitere Bohrung 34 ausgeführt (Fig. 2). Wie aus Fig. 3 ersichtlich ist, weist der Kontakt 32 eine Aushöhlung 35 auf, die einen sechskantigen Querschnitt aufweist. Durch die zweite vertikale Bohrung 34 gelangt man mit einem Sechskantschlüssel bis in die genannte Aushöhlung 35 im Kontakt 32.

Mit Hilfe des Sechskantschlüssels, der in den Kontakt 32 eingesetzt ist, kann man den Kontaktstift 30 drehen. Da der Kontakt 32 am Bolzen 31 exzentrisch angebracht ist, wird sich diejenige Stelle auf der Oberfläche des Kontaktes 32, auf der der Erosionsdraht 5 die zylindrische Oberfläche des Kontaktes 32 berührt, mehr oder weniger von der Drehachse B des Bolzens 31 entfernen. Dadurch kann die Lage der Referenzstelle für den Erodierdraht 5 sehr genau und dabei auch einfach wie erforderlich eingestellt werden.

Nachdem die gewünschte Einstellung des Kontaktes 32 erreicht worden ist, kann man die eingestellte Lage des Kontaktstiftes 30 mit Hilfe einer Schraube 36 fixieren. Es kann sich um eine Madenschraube 36 handeln, die in einer weiteren horizontalen Öffnung 37 eingeschraubt ist. Diese Öffnung 37 ist ebenfalls im Richblock 1 ausgeführt, und sie verläuft rechtwinklig zur ersten horizontalen Bohrung 29. Die Spitze 38 der genannten Fixierschraube 36 ist aus einem isolierenden Material, da sie ja auf der Oberfläche des Bolzens 31 aus einem leitfähigen Material aufliegt.

Die äussere Endpartie des Bolzens 31 ist mit einer Klemmschraube 39 versehen. Zwischen dieser Schraube 39 und der entsprechenden Auflagefläche auf dem Bolzen 31 ist ein Leiter 40 geklemmt, der einen elektrischen Impuls zur zentralen Einheit überträgt, nachdem der Erodierdraht 5 das Kontaktglied 32 berührt hat.

Da dem Erodierdraht 5 bei jeder Neigung desselben immer nur eine der Seitenlinien des zylinderförmigen Mantels des Kontaktes 32 gegenübersteht, wobei diese Seitenlinie rechtwinklig zum Erodierdraht 5 verläuft, ist der Zeitpunkt der Berührung des Kontaktes 32 durch den Erodierdraht 5 von der Neigung des Drahtes 5 praktisch unabhängig. Deswegen lässt sich die Lage des Erodierdrahtes 5 mit Hilfe einer solchen Drahtrichteinrichtung mit einer Genauigkeit einstellen, die im Bereich von 2 bis 3 Tausendsteln von Millimetern liegt.

Wie aus Fig. 2 ersichtlich ist, ragt der Kontakt 32 in die vertikale, zentrale Bohrung 18 im Richtblock 1. Rechtwinklig zur ersten Kontakteinrichtung 25 ist die zweite Kontakteinrichtung 26 unter der anderen vertikalen Wand 28 des Richtblockes 1 angeordnet. Während des Richtvorganges erhält die Führungsvorrichtung für den Erodierdraht 5 den Befehl, den Erodierdraht 5 rechtwinklig zur Oberfläche des Kontaktes 32 einer der zwei Kontakteinrichtungen 25 bzw. 26 zu führen. Nachdem die allfällig erforderliche Korrektur der Lage des Erodierdrahtes 5 in dieser Richtung erfolgte, erhält die Führungsvorrichtung für den Erodierdraht 5 den Befehl, den Erodierdraht 5 zum Kontakt 32 jener Kontakteinrichtung 26 bzw. 25 zu führen, die zur erstgenannten Kontakteinrichtung rechtwinklig steht. Falls erforderlich, wird eine Korrektur der Lage des Erodierdrahtes 5 auch in dieser Richtung vorgenommen. Hiernach ist die Erodiermaschine zur Bearbeitung von Werkstücken bereit.

Falls die Führung der unteren Partie des Erodierdrahtes 5 in einer zum Erodierdraht 5 rechtwinklig stehenden Ebene unbeweglich ist, kommt man mit einer einzigen Kontaktstelle 20 mit den zwei rechtwinklig zueinander stehenden Kontakteinrichtungen 25 und 26 aus, die sich oben am Richtblock 1 befindet.

Um die Lage des Erodierdrahtes 5, der im Maschinenkopf eingespannt ist, kontrollieren und gegebenenfalls auch nachstellen zu können, verschiebt man den Richblock 1 auf dem Balken 15 so, dass der Erodierdraht 5 in einem etwa gleichen Abstand von den Kontakten 32 der beiden Kontakteinrichtungen 25 und 26 liegt. Dann wird die Ausrichtung des Drahtes 5 in beschriebener Weise durchgeführt und hiernach wird die Richteinrichtung aus dem Bereich des Maschinenkopfes mit Hilfe des Balkens 15 und des mit diesem in Eingriff stehenden Zwischenstückes weggeführt.

## Patentansprüche

1. Richteinrichtung für einen Erodierdraht (5) einer Draht-Elektroerosionsmaschine, mit einem elektrisch leitfähigen Richtblock (1), an dem wenigstens ein elektrischer Kontakt (32) angebracht ist, mit dessen Oberfläche der Erodierdraht (5) in Berührung bringbar ist, wobei dessen Oberfläche gekrümmt ist, dadurch gekennzeichnet, dass der elektrische Kontakt (32) als Kontaktstift (30) mit einem Bolzen (31) ausgebildet ist, wobei die Achse (B) des Bolzens (31) exzentrisch zur Achse (G) des elektrischen Kontaktes (32) liegt und dass der Bolzen (31) gegenüber dem Richtblock (1) drehbar gelagert ist, so dass der elektrische Kontakt (32) gegenüber dem Richtblock (1) verstellbar ist.

2. Richteinrichtung nach Anspruch 1, dadurch gekennzeichnet, dass der elektrische Kontakt (32) zylinderförmig ist und dass er mit einer seiner Grundflächen an den Bolzen (31) exzentrisch angeschlossen ist.

3. Richteinrichtung nach Anspruch 1, dadurch gekennzeichnet, dass der Richtblock (1), horizontale Bohrungen (29) aufweist, in denen der jeweilige Bolzen (31) angeordnet ist.

4. Richteinrichtung nach Anspruch 3, dadurch gekennzeichnet, dass das Innere der Bohrung (29) mit einem Futter (33) aus einem Isoliermaterial ausgekleidet ist, das den Bolzen (31) umgibt.

5. Richteinrichtung nach Anspruch 4, dadurch gekennzeichnet, dass im Richtblock (1) eine weitere horizontale Bohrung (37) ausgeführt ist, dass diese weitere Bohrung (37) mit der ersten Bohrung (29) einen Winkel von 90° umschliesst und in der ersten Bohrung (29) mündet und dass in der weiteren Bohrung (37) eine Schraube (36) zum Festklemmen des Bolzens (31) vorhanden ist.

6. Richteinrichtung nach Anspruch 3 oder 4, dadurch gekennzeichnet, dass der Bolzen (31) des Kontaktstiftes (30) mit einem Gewinde versehen ist und dass auch die Innenwand der Bohrung (29) bzw. der Hülse (33) mit einem entsprechenden Gewinde versehen ist.

7. Richteinrichtung nach Anspruch 1, dadurch gekennzeichnet, dass der Richtblock (1) zwei Bohrungen (29) zur Aufnahme von je einem Bolzen (31) aufweist und dass die Achsen (B) dieser beiden Bohrungen einen Winkel von vorzugsweise 90° einschliessen.

8. Richteinrichtung nach Anspruch 7, dadurch gekennzeichnet, dass dort, wo sich die Achsen (B) der Bohrungen (29) kreuzen, eine vertikal verlaufende Bohrung (18) im Richtblock (1) ausgeführt ist und dass in dieser Öffnung (18) die zylinderförmigen Kontakte (32) liegen.

9. Richteinrichtung nach Anspruch 8, dadurch gekennzeichnet, dass das freie Ende des zylinderförmigen Kontaktes (32) mit einem Innensechskant (35) versehen ist und dass in der gegenüberliegenden Wand des Richtblocks (1) und koaxial zur Bohrung (29) eine weitere Bohrung (34) ausgeführt ist, durch welche man mit einem Sechskantschlüssel bis zum Kontakt (32) gelangen kann.

## Claims

1. Aligning apparatus, for an erosion wire (5) of a wire-electro-erosion-machine, having an electrically conductive aligning block (1) to which at least one electric contact (32) is attached, the erosion wire (5) being able to be brought into contact with the surface thereof, the surface thereof being curved, characterised in that the electric contact (32) is formed as a contact element (30) having a bolt (31), the axis (B) of the bolt (31) lying eccentrically with respect to the axis (G) of the electric contact (32) and in that the bolt (31) is rotatably mounted relative to the aligning block (1) so that the electric contact (32) is adjustable relative to the aligning block (1).

2. Aligning apparatus according to claim 1, characterized in that the electrical contact (32) is of cylindrical form and in that it is attached eccentrically to the bolt (31) with one of its lower surfaces.

3. Aligning apparatus according to claim 1, characterised in that the aligning block (1) has horizontal bores in which respective bolts (31) are arranged.

4. Aligning apparatus according to claim 3, characterised in that the inside of the bore (29) is covered with a lining (33) of an insulating material which encircles the bolt (31).

5. Aligning apparatus according to claim 4, characterized in that in the aligning block (1) a further horizontal bore (37) is constructed, in that this further bore (37) opens into the first bore (29) and is angled at 90° thereto and in that a screw (36) is present in the further bore (37) for wedging the bolt (31).

6. Aligning apparatus according to claim 3 or 4, characterised in that the bolt (31) of the contact element (30) is provided with a coil and in that the inside wall of the bore (29) or of the casing (33), as the case my be, is also provided with a corresponding coil.

7. Aligning apparatus according to claim 1, characterised in that the aligning block (1) has two bores (29) for receiving respective bolts (31) and that the axes (B) of these bores are angled preferably at 90°.

8. Aligning apparatus according to claim 7, characterised in that a vertically extending bore (18) is constructed in the aligning block (1) where the axes (B) of the bores (29) meet and in that the cylindrical contacts (32) lie in this opening (18).

9. Aligning apparatus according to claim 8, characterised in that the free end of the cylindrical contact (32) is provided with a hexagonal recess (35) and in that a further bore (34) is constructed in the apposite wall of the aligning block (1), coaxially of the bore (29), through which bore the contact (32) can be reached with a hexagonal spanner.

**Revendications**

1. Dispositif de positionnement du fil d'érosion (5) d'une machine d'électro-érosion à fil, comportant un bloc de pointage (1) électriquement conducteur, muni d'au moins un contact électrique (32) dont la surface est susceptible de venir en contact avec le fil d'érosion (5), cette surface étant courbée, caractérisé en ce que le contact électrique (32) est réalisé sous la forme d'une fiche de contact (30) avec un boulon ou une tige (31), l'axe (B) du boulon (31) étant excentrique par rapport à l'axe (G) du contact électrique (32) et en ce que le boulon (31) est monté à rotation par rapport au bloc de pointage (1), de telle façon que le contact électrique (32) soit réglable par rapport au bloc de pointage (1).

2. Dispositif de positionnement selon la revendication 1, caractérisé en ce que le contact électrique présente une forme cylindrique et en ce qu'il est relié de façon excentrique par rapport au boulon (31) par l'une de ses surfaces de base.

3. Dispositif de positionnement selon la revendication 1, caractérisé en ce que le bloc de pointage (1) comporte des alésages horizontaux (29) dans chacun desquels est monté le boulon (31) intéressé.

4. Dispositif de positionnement selon la revendication 3, caractérisé en ce que l'alésage (29) renferme un mandrin (33) en matériau isolant qui entoure le boulon.

5. Dispositif de positionnement selon la revendication 4, caractérisé en ce qu'il est prévu, dans le bloc de pointage (1), un second alésage horizontal (37), en ce que ce second alésage (37) forme avec le premier alésage (29) un angle de 90° et débouche dans le premier alésage (29), et en ce qu'il est prévu dans le second alésage (37) une vis (36) pour bloquer le boulon (31).

6. Dispositif de positionnement selon la revendication 3 ou 4, caractérisé en ce que le boulon (31) de la fiche de contact (30) comporte un filetage, et en ce que la paroi intérieure de l'alésage (29) ou du mandrin (33) est pourve d'un taraudage correspondant.

7. Dispositif de positionnement selon la revendication 1, caractérisé en ce que le bloc de pointage (1) comporte deux alésages (29) destinés à recevoir chacun un boulon (31) et en ce que les axes (B) de ces deux alésages forment de préférence entre eux un angle de 90°.

8. Dispositif de positionnement selon la revendication 7, caractérisé en ce qu'au point d'intersection des axes (B) des alésages (29), est prévu un alésage vertical (18) s'étendant verticalement dans le bloc de pointage (1) et en ce que le contact cylindrique (32) se trouve dans l'ouverture (18) ainsi ménagée.

9. Dispositif de positionnement selon la revendication 8, caractérisé en ce que l'extrémité libre du contact cylindrique (32) est munie d'un six pans creux (35) et en ce qu'il est prévu, dans la paroi opposée du bloc de pointage (1) et coaxialement à l'alésage (29), un autre alésage (34) grâce auquel on peut accéder avec un clé a six pans au contact (32).

FIG. 1

FIG. 3

FIG. 2